# EUROPEAN PATENT SPECIFICATION

(11) **EP 3 731 624 B1**
(45) Date of publication and mention of the grant of the patent: **02.03.2022**
(21) Application number: 18827139.9
(22) Date of filing: 28.12.2018
(51) Int. Cl.: A01G 17/02, A01G 3/04

(54) **PROCESS FOR PRUNING A ROW OF PLANTS SUPPORTED BY POSTS**
VERFAHREN ZUM BESCHNEIDEN EINER DURCH PFOSTEN GESTÜTZTEN PFLANZENREIHE
PROCÉDÉ D'ÉLAGAGE D'UNE RANGÉE DE PLANTES SUPPORTÉE PAR DES MONTANTS

(30) Priority: 29.12.2017 EP 17306973
(43) Date of publication of application: 04.11.2020
(73) Proprietor: CNH Industrial France S.A.S., 91150 Morigny-Champigny (FR)
(72) Inventor: DE BOLLE, Lieven, 9030 Mariakerke (BE); PREAU, Nicolas, 85300 Soullans (FR)
(74) Representative: CNH Industrial IP Department
(86) International application number: PCT/EP2018/097142
(87) International publication number: WO 2019/129888

(56) References cited:
- EP-A1- 1 790 211
- EP-A2- 2 433 488
- FR-A1- 2 893 223
- SU-A1- 688 156
- US-A1- 2006 272 201

## Description

### Field of the invention

The invention relates to a process for pruning a row of plants supported by posts which are spaced by a distance d from each other along said row, as well as a machine comprising means for implementing such a process.

### Background art

Pruning machines are known, comprising a motorized chassis having a straddling tunnel equipped with two pruning harrows that are disposed each respectively on one side of said tunnel, so as to prune on their two sides the plants that are successively introduced within said tunnel as the motorized chassis is moved along the row. A known machine is described in the publication FR 2 893 223 A1.

Such pruning can be performed in particular in the general field of farming of berries growing on trees or bushes, especially for berries such as grapes, raspberries, red, white or blackcurrants. Indeed, especially for the field of vinification, it is interesting to remove parts of the branches and leaves to increase the exposure of growing grapes to sun radiation, so as to improve their taste by managing the ratio between water and sugar.

In addition, before mechanically harvesting the berries, the pruning could be perform to limit the quantity of undesirable pieces of branches and/or leaves that may be detached from the plants by the harvesting machine, and then mixed to said berries within the harvested crop.

As the plants of a row are generally supported by posts, it is necessary to avoid contact between the pruning harrows and said posts, so as to avoid risks of damages on said posts and/or on said harrows, as well as to avoid tearing of the threads extending between two adjacent posts for supporting said plants. To do so, the pruning harrows are operable reversibly in an open state wherein they are moved apart upon the passage of each posts between them.

Conventionally, the opening of the harrows is performed manually by the operator driving the machine, in particular by actuating a button provided on that purpose on the control board of the driver station of said machines.

However, such manual actuation, in addition to implying important risks of erroneous operations of the harrows, is fastidious for the operator and also monotonous within a row due to the constancy of the distance d between two adjacent posts along said row.

To overcome these drawbacks, automatic opening of the pruning harrows is known, especially from document US-7 652 766, thanks to the implementation of at least one sensor, for example an optical sensor and/or a magnetic sensor, for detecting the passage of posts between the pruning harrows.

However, these solutions are not satisfactory, because the implementation of such sensors is relatively expensive and requires important maintenance to remain reliable upon pruning operations.

Moreover, the reliability of such sensors may be compromised depending on the abundancy of the vegetation and/or the nature of the posts. Thus, in case of an abundant vegetation, optical sensors may be inefficient for detecting the posts, which may be hidden by said vegetation. In the same way, magnetic sensors may be inefficient when the posts contain too little metallic component.

The invention aims to improve the prior art by proposing a process for pruning a row of plants by means of a motorized machine to be driven along said row, said process allowing for avoiding the contact of the pruning harrows with the posts in a simple, more reliable and less expensive manner, in particular by avoiding the implementation of complex sensor systems.

### Summary of the invention

For that purpose, and according to a first aspect, the invention relates to a process for pruning a row of plants supported by posts which are spaced by a distance d from each other along said row, said process using a machine comprising a straddling tunnel equipped with a pruner, said pruner comprising two pruning harrows disposed each respectively on one side of said tunnel, said harrows being operable reversibly in an open state wherein they are moved apart, said process providing for driving the machine at a speed V along the row by placing said row within the straddling tunnel in order to prune it on each side between the pruning harrows and for operating said harrows in their open state upon the passage of each posts between them, the opening of the pruning harrows being operated by means of an automatic procedure which is determined by a previous learning stage using several successive manual openings of the pruning harrows to determine an opening time period necessary for the passage of a post at the driving speed V and an interval time period separating said openings, said opening and interval time periods being applied during the automatic procedure.

According to a second aspect, the invention relates to a machine comprising a motorized chassis to be moved at a driving speed V along a row of plants supported by posts which are spaced by a distance d from each other, said machine comprising a straddling tunnel arranged for placing said row inside during its movement, said straddling tunnel being equipped with a pruner comprising two pruning harrows disposed each respectively on one side of said tunnel in order to be able to prune the row on each side between the pruning harrows, said machine comprising a device for reversibly operating the harrows in an open state wherein they are moved apart, said device comprising means for implementing such a process.

### Description of the drawings

Other aspects and advantages of the invention will become apparent in the following description made with reference to the appended figures, wherein:
figure 1 represents a front view of a pruning machine for implementing a process according to the invention;
figure 2a represents schematically the steps of a process for pruning to be implemented by means of the machine of figure 1, figure 2b representing more particularly the steps of the learning stage of said process, as well as a chart representing in particular the determination of opening time periods during successive manual openings of the harrows;
figure 3 is a chart representing the states of the harrows and the corresponding applied opening and interval time periods during the automatic procedure.

### Detailed description of an embodiment of the invention

With reference to these figures, we describe below a process for pruning a row of plants supported by posts which are spaced by a distance d from each other along said row, as well as a machine comprising means for implementing such a process.

To do so, the machine comprises a motorized chassis 1 that is equipped with a driver station 2 and that is movable along rows of plants, a pruning unit 3 being mounted onto a front portion of said structure for pruning a least one of said rows of plants.

The process is in particular operable in the field of farming of berries growing on trees or bushes, especially berries such as grapes, raspberries, red, white or blackcurrants, and other berries growing in bunches, in order to prune such trees or bushes, in particular prior to performing a harvesting procedure on said trees or bushes for recovering said berries.

In particular, the pruning unit 3 can be mounted onto the motorized chassis 1 permanently or removably, so as to be replaceable with other equipment and accessories, for example harvesting equipment, spraying equipment or equipment for working the soil.

The pruning unit 3 includes a straddling chassis 4 which delimits a straddling tunnel 5 into which the plants are successively introduced to move through said tunnel between respective openings at the front and at the rear of said tunnel. Moreover, the pruning unit 3 is equipped with a pruner 6 comprising two pruning harrows 7, said pruning harrows being disposed respectively on one side of the straddling tunnel 5.

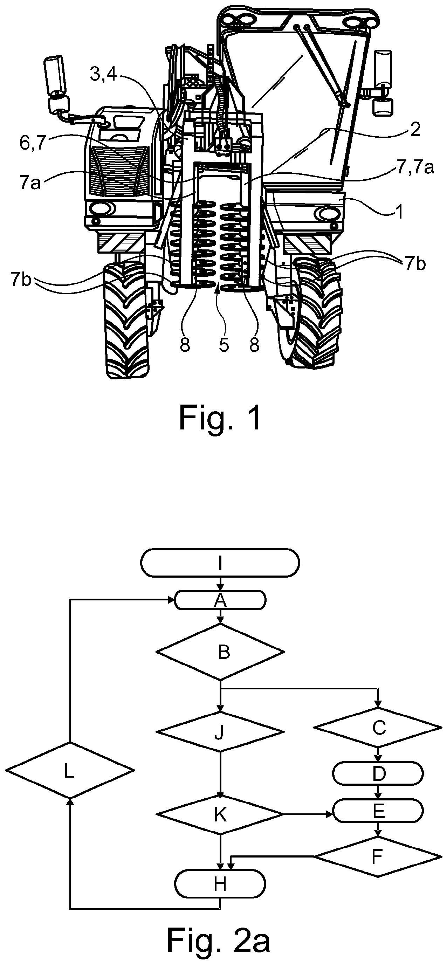

In the embodiment shown in figure 1, the pruning harrows 7 comprise each a vertical drive shaft 7a mounted in rotation around its revolution axis on respectively one side of the tunnel 5, as well as a stack of toothed cutting disks 7b arranged along said shaft to perform pruning on plants introduced within said tunnel when said shaft is moved in rotation.

The process provides for driving the machine at a speed V along a row of plants by placing said row within the straddling tunnel 5, in order to prune said row on each side between the pruning harrows 7.

During the performing of the process, it is necessary to avoid contact between the pruning harrows and the posts supporting the plants, so as to avoid risks of damages on said posts and/or on said harrows, as well as to avoid tearing of the threads extending between two adjacent posts for supporting said plants.

To do so, the harrows are operable reversibly in an open state wherein they are moved apart, in particular by means of a dedicated device implemented within the machine for performing such reversible operation, the process providing, during the driving of the machine along a row of plants, for operating said harrows in their open state upon the passage of each posts of said row between them.

The operating device may comprise vertical cradles 8 that are each mounted in rotation on the straddling chassis 4 on respectively one side of the tunnel 5 while supporting each respectively a rotating shaft 7a, said cradles being reversibly pivotable around their respective vertical axis to put the harrows 7 either in an open state or in a close state, depending on the direction of rotation of said pivot movement.

The operation of the harrows 7 in their open state could be performed manually by the operator of the machine. To do so, the operating device can in particular comprise a button for manually opening the harrows 7, said button being for example arranged on the control board in the driver station 2 of the machine, wherein the operator sits during the pruning operation.

In addition to this manual operation, the process provides for operating the opening of the pruning arrow 7 by means of an automatic procedure H which is determined by a previous learning stage using several successive manual openings of said harrows in order to determine an opening time period T_{ON} necessary for the passage of a post at the driving speed V, and an interval time period T_{period} separating said openings, said opening and interval time periods being then applied during the automatic procedure H.

To do so, the operating device comprises means for performing such an automatic procedure H, in particular means for determining opening and interval time periods during several successive actuations of the opening button by the operator, as well as means for memorizing said measured time periods.

Thus, the process for pruning allows for avoiding the contact of the pruning harrows with the posts in a simple, more reliable and less expensive manner, in particular by avoiding the implementation of complex sensor systems.

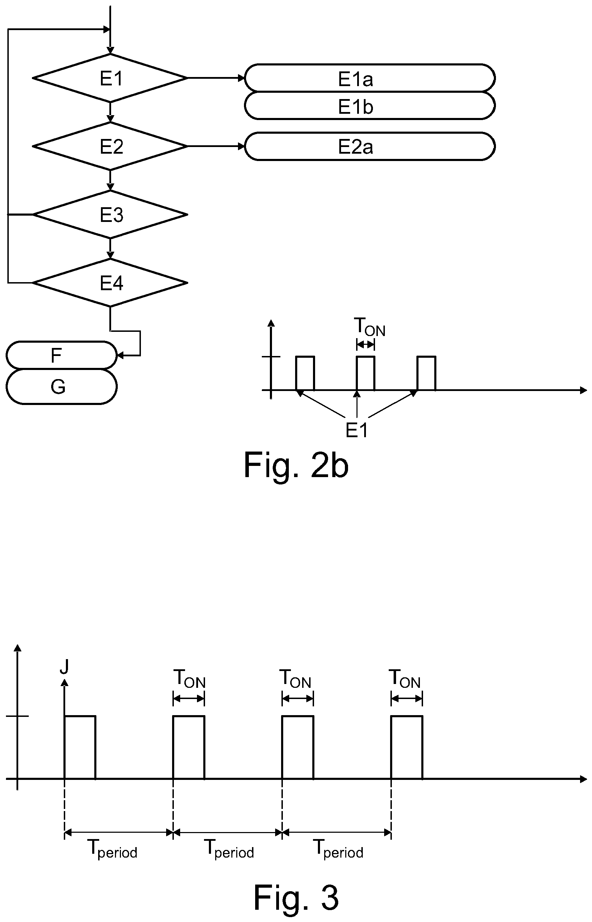

In relation with figures 2a and 2b, we describe below in further details an embodiment of the process of the invention, especially regarding the learning stage and the automatic procedure H.

The process comprises an initialisation step I, wherein in particular the operator starts the driving engine of the machine after having taken place in the driver station 2, for example for moving the machine towards the field of plants to be pruned, and more particularly for starting to drive said machine along a row of said plants.

Once the initialisation step I has been achieved, the process further launches a consecutive step A for starting the pruner 6, in particular by starting the movement in rotation of the pruning harrows 7. To do so, the machine may comprise a dedicated button and/or lever arranged on the control board of the driver station 2, the operator actuating said button and/or lever for starting the pruner 6.

The process further comprises a step B for controlling the functioning state of the pruner 6 and the driving speed V of the machine, said step being launched following the achievement of the pruner starting step A. In particular, the control step B can take place throughout the process for pruning, for eventually alerting the operator in case of problem, for example through a dedicated indicator light or any other communication means arranged in the driver station 2.

For determining the automatic procedure H, in particular when the machine is used for the first time after a time period, for example at the beginning of a pruning operation, the process provides for launching a previous learning stage E to determine opening and interval time periods T_{ON}, T_{period} to be applied during said automatic procedure H.

In relation to figure 2a, the process provides a step C for initiating the learning stage E, in particular through a manual action of the operator. To do so, the operating device can comprise a button for manually initiating the learning stage E, said button being in particular arranged on the control board in the driver station 2, the operator actuating said button during the learning stage initiation step C.

In particular, the learning stage E may be initiated after the verification that the driving speed is within a given margin, for example a stored range of speeds that are coherent with a displacement of the machine along a row of plants for performing a process for pruning. To do so, as represented in figure 2a, the learning stage initiation step C takes place after the control step B.

The process can provide for deactivating the initiating button when the driving speed is not comprised within the given margin, for example when said speed is too low, or even null, or on the other hand when said speed is too high, which may correspond in particular to a displacement of the machine out of the field of plants, especially between said field and a storage and/or maintenance location of the machine. Thus, as long as the driving speed is not comprised within the given margin, actuations of the initiating button will not initiate the learning stage E.

In particular, the process can provide for notifying the operator about the possibility or not to initiate the learning stage. For example, the process can provide for illuminating - not illuminating - the initiating button when the driving speed is comprised within - out of - the given margin. According to a variant, the process can provide for producing an error message when the operator actuates the initiating button whereas the driving speed is out of the given margin, for example by emitting a dedicated sound or by displaying a text error message on the control board.

Once the learning stage has been properly initiated, the process provides a step D for resetting opening and interval time periods T_{ON}, T_{period} that were eventually determined and memorized before the learning stage initiation step C, for example during a previous process for pruning. As represented in figure 2a, this resetting step D takes place after the learning stage initiation step C.

The process then provides for launching concretely the learning stage E, so as to determine new opening and interval time periods T_{ON}, T_{period} to be applied during a further automatic procedure H. In relation to figure 2b, we describe below in further details an embodiment of the achievement of the learning stage.

During the learning stage E, the operator normally performs successive manual openings of the pruning harrows 7 for avoiding their contact against a post during the pruning of a row of plants, said learning stage providing for using said successive manual openings to determine the new opening and interval time periods T_{ON}, T_{period}.

According to an embodiment, the process may provide to measure the opening and interval time periods T_{ON}, T_{period} during the learning stage E, and then to apply the averages of said measured time periods during the consecutive automatic procedure H. To do so, the operating device comprises means for measuring the the opening and interval time periods T_{ON}, T_{period}, as well as means for calculating the averages of said measured periods, the means for memorizing of said operating device being adapted to memorize said averages for applying the during the consecutive automatic procedure H.

Advantageously, the process may provide to trigger the automatic procedure H after a completion of a determined number of manual openings of the pruning harrows during the learning stage E, said number being established in order to have enough measured opening and interval time periods T_{ON}, T_{period} to calculate the most relevant averages. For example, the automatic procedure H may be triggered after the completion of four manual openings.

In relation to figure 2b, the learning stage E comprises a first step E1, wherein the operator performs manually an opening of the pruning harrows 7, in particular by actuating the opening button provided on that purpose on the control board in the driver station 2.

During this first step E1, the learning stage E launches in particular a sub-step E1a for increasing a counter number of manual openings. The first step E1 also launches a sub-step E1b for starting the measuring of an interval time period T_{period}, as well as for increasing a counter of the number of measured interval time periods T_{period}.

The learning stage E further comprises a second step E2, which is consecutive to the opening button actuating step E1, and wherein the operator maintains the actuation of said opening button for maintaining the pruning harrows 7 in the open state.

This second step E2 mainly provides for measuring the opening time period T_{ON} necessary for the passage of a post at the driving speed V of the machine, for example by measuring the time period during which the operator maintains the actuation of the opening button, which corresponds to said opening time period. Once the opening time period T_{ON} has been measured, the second step E2 launches a sub-step E2a for increasing a counter of the number of measured opening time periods T_{ON}.

The learning stage E further comprises a third step E3 for checking the number of manual opening performed since the beginning of said learning stage, in particular by checking the counter increased during the first step E1, E1a.

Thus, if the number registered by the counter of manual openings is equal to the determined number necessary to trigger the automatic procedure H, then the process launches a step E4 for initiating said triggering. Otherwise, the learning stage E restarts a loop to perform an additional manual opening and goes back to the first step E1, wherein the operator actuates the opening button again to perform said additional manual opening.

In particular, during the launching of this new loop, the new first step E1, during the sub-step E1b for measuring the interval time period T_{period}, stops the measuring of the interval time T_{period} that has been started during the preceding first step E1, i.e. during the preceding manual opening of the harrows 7, and the interval time period which has been measured is then memorized by the operating device.

The process can provide to notify the operator about the achievement of the learning stage E, in particular when the required number of measured opening and interval time periods T_{ON}, T_{period} has been reached, or on the contrary about the requirement of an additional manual opening of the harrows 7 for allowing said achievement. For example, the process can provide to emit a sound message and/or a visual message upon actuation of dedicated communication means on the control board.

To avoid using of erroneous measured opening and/or interval time periods T_{ON}, T_{period}, in particular time periods T_{ON}, T_{period} corresponding to an erroneous actuation of the opening button, the process can provide for triggering the automatic procedure H after the verification that the measured openings and/or interval time periods T_{ON}, T_{period} are within a given margin, for example stored ranges of time periods T_{ON}, T_{period} that are coherent respectively with the duration of a passage of a post between the harrows 7 at the driving speed V and the duration of a passage of the machine at the driving speed V within two consecutive posts in a row of plants. For example, the learning stage E can check, for each of the measured time periods T_{ON}, T_{period}, that said time period is within a margin of 15% of error.

To do so, in relation to figure 2b, the learning stage comprises a fourth step E4 for performing such a verification, said step being consecutive to the step E3 for checking that the number of necessary measured time periods T_{ON}, T_{period} has been reached. Thus, if all of the measured time periods T_{ON}, T_{period} are within the required margin, the learning stage E launches a step F for validating said time periods, and in particular for calculating the averages of said time periods to be applied during the automatic procedure H. Otherwise, the learning stage E only memorizes the time periods T_{ON}, T_{period} comprised within the required margins and launches a new loop for new manual openings, in particular for obtaining the missing number of required and valid measured time periods T_{ON}, T_{period}.

The learning stage E can launch, in particular in parallel to its final validating step F, a step G for resetting the counter of the number of manual openings, in order to prepare the operating device to an eventual further learning stage.

In relation to figure 2a, once the learning stage E has achieved its final step F for validating the measured time periods T_{ON}, T_{period}, the process provides for triggering the automatic procedure H wherein the averages of time periods calculated from said validated measured time periods will be applied to automatically operating the harrows 7.

In particular, the process may provide for starting the automatic procedure H at an initial time which is manually triggerable, for example by the manual actuation by the operator of a dedicated button and/or lever on the control board in the driver station 2. The process may also provide for notifying the operator that the automatic procedure H can be triggered, especially after the completion of the learning stage E, for example through illuminating the button for launching said automatic procedure, and/or through other dedicated communication means provided on the control board and/or in the driver station 2.

The process may in particular provide for starting the automatic procedure H by a first opening of the pruning harrows 7, said automatic procedure further applying the opening and interval time periods T_{ON}, T_{period} that were determined during the learning stage E for automatically opening the harrows 7 starting from this first opening.

According to an embodiment, the process may notably provide for triggering the automatic procedure H upon manual actuation of the opening button, said manual actuation triggering a manual opening of the harrows 7, which constitutes the first opening as described above.

In particular, the automatic procedure H can be triggered directly at the beginning of the process for pruning, notably after the completion of the pruner starting step A and the control step B. To do so, in relation to figures 2a and 3, the process provides for launching a step J after the control step B, wherein the operator may in particular actuate a dedicated button for triggering the automatic procedure H, and advantageously the button for opening the harrows 7.

Such a direct triggering of the automatic procedure H may notably be possible only if a learning stage E has been previously achieved, and more particularly if said learning stage has not been achieved too long before the pruner starting step A. For example, if the machine has been unused for too long, especially since the last harvesting period, the opening and interval time periods T_{ON}, T_{period} memorized during the last learning stage E may be obsolete, and then not relevant for ensuring the pruning of the current rows of plants.

As represented in figure 2a, the process provides, once the operator has actuated the button for triggering the automatic procedure H, for launching a step K for checking the eventual presence of valid time periods T_{ON}, T_{period} in the memorizing means of the operating device. Thus, if the memorizing means effectively comprise such valid time periods T_{ON}, T_{period}, the process launches directly the automatic procedure H after the completion of the step K by applying said valid time periods. Otherwise, the process launches a new learning stage E for obtaining new valid time periods T_{ON}, T_{period}.

The process may provide for a reset manual action for stopping the automatic procedure H to manually operate the pruning harrows 7, in particular upon manual actuation of the button for opening the harrows 7, which naturally results in a manual opening of said harrows. For example, if the human operator notes a synchronisation problem between the sequence of time periods T_{ON}, T_{period} and the effective sequence of passages of plants within the straddling tunnel 5, said operator can actuate the button for manually opening the harrows

7. Then, as long as the operator presses the button, the automatic procedure H is in hold, until said operator releases said button, said automatic procedure being then restarted after said button release.

The process may also provide for a reset manual action for stopping the automatic procedure H in order to complete a new learning stage E, especially if the human operator does not manage to resynchronise the current automatic procedure H with the effective sequence of passage of plants within the straddling tunnel. To do so, the operator can in particular press the button for initiating a new learning stage E, so that the process returns to dedicated steps C, D, E.

At the end of a pruning operation, for example once a row of plants has been correctly pruned, or even at the end of the pruning of a field and/or of the working day, the process may provide for a final step L for stopping the pruner 6, said step being in particular launched upon manual deactivation of said pruner by the operator, which notably allows to stop the automatic procedure H.

## Claims

1. Process for pruning a row of plants supported by posts which are spaced by a distance d from each other along said row, said process using a machine comprising a straddling tunnel (5) equipped with a pruner (6), said pruner comprising two pruning harrows (7) disposed each respectively on one side of said tunnel, said harrows being operable reversibly in an open state wherein they are moved apart, said process providing for driving the machine at a speed V along the row by placing said row within the straddling tunnel (5) in order to prune it on each side between the pruning harrows (7), and for operating said harrows in their open state upon the passage of each posts between them,
said process being **characterized in that** the opening of the pruning harrows (7) is operated by means of an automatic procedure (H) which is determined by a previous learning stage (E) using several successive manual openings (E1) of the pruning harrows (7) to determine an opening time period (T_{ON}) necessary for the passage of a post at the driving speed V and an interval time period (T_{period}) separating said openings, said opening and interval time periods being applied during the automatic procedure (H).

2. Process according to claim 1, **characterized in that** the automatic procedure (H) is triggered after the completion of a determined number of manual openings (E1) of the pruning harrows (7) during the learning stage (E).

3. Process according to claims 1 or 2, **characterized in that** opening (T_{ON}) and interval (T_{period}) time periods are measured during the learning stage (E), the averages of said measured time periods being applied during the automatic procedure (H).

4. Process according to claim 3, **characterized in that** the automatic procedure (H) is triggered after the verification that the measured opening (T_{ON}) and/or interval (T_{period}) time periods are within a given margin.

5. Process according to any of claims 1 to 4, **characterized in that** the automatic procedure (H) starts at an initial time (J) which is manually triggerable.

6. Process according to any of claims 1 to 5, **characterized in that** the automatic procedure (H) starts by a first opening (J) of the pruning harrows (7).

7. Process according to any of claims 1 to 6, **characterized in that** it provides for a reset manual action (R) for stopping the automatic procedure in order to either complete a new learning stage (E) or to manually operate the pruning harrows (7).

8. Process according to any of claims 1 to 7, **characterized in that** it provides for a manual action for initiating the learning stage (E).

9. Process according to any of claims 1 to 8, **characterized in that** the learning stage (E) is initiated after the verification that the driving speed V is within a given margin.

10. Machine comprising a motorized chassis (1) to be moved at a driving speed V along a row of plants supported by posts which are spaced by a distance d from each other, said machine comprising a straddling tunnel (5) arranged for placing said row inside during its movement, said straddling tunnel being equipped with a pruner (6) comprising two pruning harrows (7) disposed each respectively on one side of said tunnel in order to be able to prune the row on each side between the pruning harrows (7), said machine comprising a device for reversibly operating the harrows (7) in an open state wherein they are moved apart, said device comprising means for implementing a process according to any of claims 1 to 9.

11. Machine according to claim 10, **characterized in that** the operating device comprises a button for manually opening the pruning harrows (7).

12. Machine according to claims 10 or 11, **characterized in that** the operating device comprises a button for manually initiating the learning stage (E).

## Patentansprüche

1. Verfahren zum Beschneiden einer Reihe von Pflanzen, die durch entlang der Reihe in einem Abstand d zueinander beabstandete Pfosten gestützt ist, wobei das Verfahren eine Maschine nutzt, die einen Portaltunnel (5) umfasst, der mit einer Schneideinrichtung (6) ausgerüstet ist, wobei die Schneideinrichtung zwei Schneideggen (7) umfasst, die jeweils an einer Seite des Tunnels angeordnet sind, wobei die Eggen reversibel in einen geöffneten Zustand, in dem sie auseinander bewegt sind, betätigbar sind, wobei das Verfahren vorsieht, die Maschine unter Anordnung der Reihe innerhalb des Portaltunnels (5) mit einer Geschwindigkeit V entlang der Reihe zu fahren, um diese auf jeder Seite zwischen den Schneideggen (7) zu beschneiden, und die Schneideggen beim Durchtritt jedes Pfostens zwischen sich in den geöffneten Zustand zu betätigen,
wobei das Verfahren **dadurch gekennzeichnet ist, dass** das Öffnen der Schneideggen (7) durch einen automatischen Vorgang (H) ausgeführt wird, der durch eine vorangegangene Lernphase (E) bestimmt wird, die mehrere aufeinanderfolgende manuelle Öffnungen (E1) der Schneideggen (7) verwendet, um eine für den Durchtritt eines Pfostens bei der Fahrgeschwindigkeit V erforderliche Öffnungszeit (Ton) und Zwischenzeiten (Tperiod) zu bestimmen, die während des automatischen Vorgangs (H) verwendet werden.

2. Verfahren nach Anspruch 1, **dadurch gekennzeichnet, dass** der automatische Vorgang (H) nach Abschluss einer vorbestimmten Anzahl von manuellen Öffnungen (E1) der Schneideggen (7) während der Lernphase (E) veranlasst wird.

3. Verfahren nach Anspruch 1 oder 2, **dadurch gekennzeichnet, dass** die Öffnungszeit (Ton) und die Zwischenzeiten (Tperiod) während der Lernphase (E) gemessen werden, wobei die Mittelwerte der gemessenen Zeiten während des automatischen Vorgangs (H) angewandt werden.

4. Verfahren nach Anspruch 3, **dadurch gekennzeichnet, dass** der automatische Vorgang (H) nach der Verifikation, dass die gemessene Öffnungszeit (Ton) und/oder die Zwischenzeiten (Tperiod) innerhalb einer vorgegebenen Toleranz liegen, veranlasst wird.

5. Erfahren nach einem der Ansprüche 1 bis 4, **dadurch gekennzeichnet, dass** der automatische Vorgang (H) zu einer Anfangszeit (J) beginnt, die manuell einstellbar ist.

6. Verfahren nach einem der Ansprüche 1 bis 5, **dadurch gekennzeichnet, dass** der automatische Vorgang (H) bei einer ersten Öffnung (J) der Schneideggen (7) beginnt.

7. Verfahren nach einem der Ansprüche 1 bis 6, **dadurch gekennzeichnet, dass** es eine manuelle Rückstellmaßnahme (R) zum Anhalten des automatischen Vorgangs vorsieht, um entweder eine neue Lernphase (E) zu beenden oder die Schneideggen (7) manuell zu betätigen.

8. Verfahren nach einem der Ansprüche 1 bis 7, **dadurch gekennzeichnet, dass** es eine manuelle Maßnahme zum Einleiten der Lernphase (E) vorsieht.

9. Verfahren nach einem der Ansprüche 1 bis 8, **dadurch gekennzeichnet, dass** die Lernphase (E) nach der Verifikation, dass die Fahrgeschwindigkeit V innerhalb einer vorgegebenen Toleranz liegt, eingeleitet wird.

10. Maschine umfassend ein motorisiertes Fahrgestell (1), das mit einer Fahrgeschwindigkeit V entlang einer Reihe von Pflanzen zu bewegen ist, die durch in einem Abstand d zueinander beabstandete Pfosten gestützt ist, wobei die Maschine einen Portaltunnel (5) umfasst, der dazu eingerichtet ist, während seiner Bewegung die Reihe in seinem Inneren anzuordnen, wobei der Portaltunnel mit einer Schneideinrichtung (6) ausgestattet ist, die zwei Schneideggen (7) umfasst, die jeweils an einer Seite des Tunnels angeordnet sind, um die Reihe auf jeder Seite zwischen den Schneideggen (7) zu beschneiden, wobei die Maschine eine Vorrichtung zum reversiblen Betätigen der Eggen (7) in einen geöffneten Zustand umfasst, in dem sie auseinander bewegt sind, wobei die Vorrichtung Mittel zum Ausführen eines Verfahrens gemäß einem der Ansprüche 1 bis 9 umfasst.

11. Maschine nach Anspruch 10, **dadurch gekennzeichnet, dass** die Betätigungsvorrichtung einen Knopf zum manuellen Öffnen der Schneideggen umfasst.

12. Maschine nach Anspruch 10 oder 11, **dadurch gekennzeichnet, dass** die Betätigungsvorrichtung einen Knopf zum manuellen Einleiten der Lernphase (E) umfasst.

## Revendications

1. Procédé d'élagage d'une rangée de plantes supportée par des poteaux disposés à une distance les uns des autres le long de ladite rangée, ledit procédé utilisant une machine comprenant un tunnel enjambeur (5) équipé d'un élagueur (6), ledit élagueur comprenant deux herses d'élagage (7) chacune disposée respectivement sur un côté dudit tunnel, lesdites herses pouvant fonctionner de manière réversible en position ouverte dans laquelle elles sont espacées, ledit procédé permettant d'entraîner la machine à une vitesse V le long de la rangée en plaçant ladite rangée dans le tunnel enjambeur (5) afin de l'élaguer des deux côtés entre les herses d'élagage (7), et de faire fonctionner lesdites herses en position ouverte lorsque chaque poteau passe entre elles,
ledit procédé étant **caractérisé en ce que** l'ouverture des herses d'élagage (7) est actionnée par le biais d'une procédure automatique (H) qui est déterminée par une étape d'apprentissage précédente (E) utilisant plusieurs ouvertures manuelles successives (E1) des herses d'élagage (7) afin de déterminer une période d'ouverture (T_{ON}) nécessaire au passage d'un poteau à la vitesse de conduite V et un intervalle de temps (T_{period}) séparant lesdites ouvertures, lesdits période d'ouverture et intervalle de temps étant appliqués pendant la procédure automatique (H).

2. Procédé selon la revendication 1, **caractérisé en ce que** la procédure automatique (H) est déclenchée après finalisation d'un nombre déterminé d'ouvertures manuelles (E1) des herses d'élagage (7) pendant l'étape d'apprentissage (E).

3. Procédé selon les revendications 1 ou 2, **caractérisé en ce que** les période d'ouverture (T_{ON}) et l'intervalle de temps (Tperiod) sont mesurés pendant l'étape d'apprentissage (E), les moyennes desdites périodes mesurées étant appliquées pendant la procédure automatique (H).

4. Procédé selon la revendication 3, **caractérisé en ce que** la procédure automatique (H) est déclenchée après vérification que la période d'ouverture (T_{ON}) et/ou l'intervalle de temps (Tperiod) mesurés se situent dans une fourchette donnée.

5. Procédé selon l'une quelconque des revendications 1 à 4, **caractérisé en ce que** la procédure automatique (H) commence à un moment initial (J) qui peut être déclenché manuellement.

6. Procédé selon l'une quelconque des revendications 1 à 5, **caractérisé en ce que** la procédure automatique (H) commence par une première ouverture (J) des herses d'élagage (7).

7. Procédé selon l'une quelconque des revendications 1 à 6, **caractérisé en ce qu'**il prévoit une réinitialisation manuelle (R) pour arrêter la procédure automatique afin de soit accomplir une nouvelle étape d'apprentissage (E) soit de faire fonctionner manuellement les herses d'élagage (7).

8. Procédé selon l'une quelconque des revendications 1 à 7, **caractérisé en ce qu'**il prévoit une initialisation manuelle de l'étape d'apprentissage (E).

9. Procédé selon l'une quelconque des revendications 1 à 8, **caractérisé en ce que** l'étape d'apprentissage (E) est initiée après vérification que la vitesse de conduite V se situe dans une fourchette donnée.

10. Machine comprenant un châssis motorisé (1) à déplacer à une vitesse de conduite V le long d'une rangée de plantes supportée par des poteaux disposés à une distance les uns des autres, ladite machine comprenant un tunnel enjambeur (5) agencé pour placer ladite rangée dans celui-ci lorsqu'il bouge, ledit tunnel enjambeur étant équipé d'un élagueur (6) comprenant deux herses d'élagage (7) chacune disposée respectivement sur un côté dudit tunnel afin de pouvoir élaguer la rangée des deux côtés entre les herses d'élagage (7), ladite machine comprenant un dispositif pour faire fonctionner les herses (7) de manière réversible en position ouverte dans laquelle elles sont espacées l'une de l'autre, ledit dispositif comprenant des moyens pour implémenter un procédé selon l'une quelconque des revendications 1 à 9.

11. Machine selon la revendication 10, **caractérisée en ce que** le dispositif d'actionnement comprend un bouton pour ouvrir manuellement les herses d'élagage (7).

12. Machine selon les revendications 10 ou 11, **caractérisée en ce que** le dispositif d'actionnement comprend un bouton pour initier manuellement l'étape d'apprentissage (E).
